# EUROPÄISCHE PATENTSCHRIFT

(11) **EP 1 183 130 B1**
(45) Veröffentlichungstag und Bekanntmachung des Hinweises auf die Patenterteilung: **16.07.2003**
(21) Anmeldenummer: 00931155.6
(22) Anmeldetag: 10.05.2000
(51) Int. Cl.: B23P 19/06, F16B 37/06

(54) **VERFAHREN UND VORRICHTUNG ZUM BEFESTIGEN EINES HILFSFÜGETEILS AN EINEM BLECHARTIGEN WERKSTÜCK UND WERKSTÜCK MIT HILFSFÜGETEIL**
METHOD AND DEVICE FOR FASTENING AN AUXILIARY JOINING ELEMENT TO A SHEET-SHAPED WORK PIECE AND WORK PIECE THAT IS PROVIDED WITH SUCH AN AUXILIARY JOINING ELEMENT
PROCEDE ET DISPOSITIF PERMETTANT DE FIXER UN ELEMENT D'ASSEMBLAGE AUXILIAIRE A UNE PIECE EN TOLE ET PIECE EN TOLE DOTEE DUDIT ELEMENT

(30) Priorität: 19.05.1999 DE 19922864
(43) Veröffentlichungstag der Anmeldung: 06.03.2002
(73) Patentinhaber: PROFIL-Verbindungstechnik GmbH & Co. KG, 61381 Friedrichsdorf (DE)
(72) Erfinder: Müller, Rudolf, 60437 Frankfurt/Main (DE)
(74) Vertreter: Manitz, Finsterwald & Partner GbR
(86) Internationale Anmeldenummer: EP0004153
(87) Internationale Veröffentlichungsnummer: WO00071293

(56) Entgegenhaltungen:
- EP-A- 0 993 902
- WO-A-00/16928
- DE-A- 19 647 831
- GB-A- 1 532 437
- US-A- 4 064 617
- US-A- 4 574 453
- US-A- 5 339 509

## Beschreibung

Die Erfindung betrifft ein Verfahren zum Befestigen eines Hilfsfügeteils an einem blechartigen Werkstück, bei dem das Hilfsfügeteil mit einem Fuß von einer Seite in das Werkstück eingedrückt wird und dieses topfartig verformt. Ferner betrifft die Erfindung eine Vorrichtung zum Befestigen eines Hilfsfügeteils an einem blechartigen Werkstück mit einer Matrize, die eine Ausnehmung aufweist, und einem Halter für das Hilfsfügeteil, der in Ausrichtung zu der Ausnehmung angeordnet und in eine Druckrichtung relativ zur Matrize bewegbar ist.

Ein Verfahren bzw. eine Vorrichtung der oben genannten Art ist aus der US-PS-5,339,509 bzw. aus der DE 19647831 A1 bekannt. Bei der US-PS-5,339,509 enthält die Matrize bewegliche Teile, die die Seitenwände der Ausnehmung in der Matrize definieren. Die Seitenwände der Ausnehmung erstrecken sich hier parallel zur Längsachse der Matrize. Dies gilt auch für die Matrize der DE 19647831 A1, die aber als massive Matrize ausgeführt ist. Ferner ist ein Verfahren und eine Vorrichtung der eingangs genannten Art aus der WO 00/16928 (EP-Anmeldung 99 946 154.4, jetzt EP-Patent 1 117 497) bekannt, die aber nicht als vorveröffentlicht gilt.

Mit dem Begriff "blechartigem Werkstück" soll im Zusammenhang mit der vorliegenden Erfindung nicht nur ein Metall-Blech gemeint sein, sondern Werkstücke, die zumindest im Bereich des Hilfsfügeteils plattenartig mit einer relativ geringen Wandstärke ausgebildet sind, wobei sich das Material des Werkstücks in ausreichendem Maße verformen läßt. Neben Metallblechen lassen sich also auch Kunststoffplatten unter den Begriff des blechartigen Werkstücks fassen.

In manchen Fällen ist es erforderlich, ein Hilfsfügeteil mit dem Werkstück zu verbinden, um mit Hilfe des Hilfsfügeteils dritte Elemente an dem Werkstück befestigen zu können. Hilfsfügeteile können beispielsweise Gewindebolzen sein, die ein Außengewinde aufweisen, auf das eine Gewindemutter aufgeschraubt werden kann. Hilfsfügeteile können auch einen Innengewinde aufweisen, in das eine Schraube eingeschraubt werden kann. Diese Aufzählung ist aber nicht abschließend. Hilfsfügeteile werden in großen Stückzahlen in Kraftfahrzeugen und Hausgeräten zum Befestigen und Halten von Verkleidungen und Leitungsbahnen benötigt. Oft reicht auch eine Rillung oder eine Rauhigkeit auf ihrer Oberfläche zum Befestigen von anderen Teilen aus.

Derartige Hilfsfügeteile haben den Vorteil, daß sie mit dem Werkstück verbunden werden können, ohne daß eine Wärmezufuhr notwendig ist, wie es beispielsweise beim Schweißen oder Löten der Fall ist. Auch andere Hilfsmittel, wie Klebstoffe, sind nicht erforderlich. Dementsprechend ist die Verbindung des Hilfsfügeteils mit dem Werkstück durch Umformen immer dann von Vorteil, wenn für das Werkstück und das Hilfsfügeteil unterschiedliche Materialien verwendet werden, die sich ansonsten nicht ohne weiteres verbinden lassen.

Im einfachsten Fall wird das Hilfsfügeteil in das Werkstück hineingedrückt und verformt dieses so, daß es auf der dem Hilfsfügeteil gegenüberliegenden Seite eine topf- oder becherartige Ausformung aufweist. Das Hilfsfügeteil wird dann klemmend im Werkstück gehalten. Eine derartige Verbindung weist zwar in den meisten Fällen eine ausreichende Scherfestigkeit auf. Die Kopfzugfestigkeit und die Sicherung gegen Verdrehen sind jedoch begrenzt, dies trifft insbesondere für die Anordnung gemäß der US-A-5,339,509 zu.

DE 30 03 908 A1 zeigt einen Stehbolzen mit Stanz- und Nietverhalten. Dieser Stehbolzen erzeugt beim Einsetzen durch Stanzen eine Öffnung. Der dabei entstehende Putzen wird in einer Ausnehmung auf der Unterseite des Stehbolzens festgehalten. Die Umfangswand dieser Ausnehmung wird gegen Ende des Stanzvorgangs radial nach außen umgebogen und untergreift dann einen ebenfalls umgebogenen Rand des Werkstücks, der beim Ausstanzen entstanden ist.

DE 22 44 945 A1 zeigt ein Verfahren zum mechanischen Verbinden von buchsenartigen Teilen mit platineartigen Teilen, bei dem vor dem Einbringen des buchsenartigen Teiles das platinenartige Teil vorgelocht werden muß. Das buchsenartige Teil hat hierbei verschiedene "Füße", die nach dem Einsetzen nach außen umgebogen werden.

Die oben erwähnte DE 196 47 831 A1 zeigt ein Verfahren zur Anbringung eines Funktionselementes, beispielsweise einen Stehbolzen, an einem blechartigen Werkstück, bei dem der Fuß des Stehbolzens Vorsprünge und Ausnehmungen hat, durch die sich beim Einsetzen Hinterschneidungen des Werkstücks mit dem Fuß des Bolzens bilden, sie erfordert daher eine besondere Ausbildung des Fußes des Stehbolzens.

Der Erfindung liegt die Aufgabe zugrunde, auf einfache Weise ein in mehrere Richtungen belastbares Hilfsfügeteil an einem Werkstück zu befestigen.

Diese Aufgabe wird bei einem Verfahren der eingangs genannten Art dadurch gelöst, daß die Ausnehmung der Matrize Wandabschnitte aufweist, die parallel zur Druckrichtung verlaufen und unterbrochen ist von Matrizenteilen die Hinterschneidungen bilden, in die Material des Fußes und des Werkstücks fließt und Hinterschneidungsbereiche des Fußes und des Werkstücks bildet, die in Umfangsrichtung begrenzt sind.

Bei dieser Vorgehensweise preßt man das Hilfsfügeteil nicht nur in das Werkstück hinein, wobei das Werkstück verformt wird. Auch das Hilfsfügeteil wird an seinem Fuß verformt. Der Fuß wird damit bezogen auf die Umfangsrichtung zumindest partiell radial nach außen verformt und bildet damit eine Hinterschneidung zum Werkstück, das in diesen Bereichen ebenfalls radial nach außen verformt wird. "Radial" bezieht sich hier auf die Hauptachse des Hilfsfügeteils, beispielsweise seine Gewindeachse. Mit dieser Ausgestaltung erreicht man zum einen eine verbesserte Kopfzugfestigkeit. Das Hilfsfügeteil wird stärker gegen ein Herausziehen aus dem Werkstück gesichert. Aufgrund der in Umfangsrichtung unterbrochenen Hinterschneidung ist aber auch dafür gesorgt, daß das Hilfsfügeteil im Werkstück gegen Verdrehen gesichert ist. Damit wird das Aufschrauben von Muttern oder das Einschrauben von Schrauben in das Hilfsfügeteil erleichtert. Derartige Schraubverbindungen können mit einem relativ hohen Drehmoment festgezogen werden. Schließlich hat diese Ausbildung den Vorteil, daß man eine Verbindung zwischen dem Hilfsfügeteil und dem Werkstück erhält, bei der insbesondere im Bereich der Hinterschneidungen das Hilfsfügeteil und das Werkstück mit relativ hohem Druck aneinander anliegen. Dieser Druck bleibt auch nach dem Fertigstellen der Verbindung erhalten. Dies ist insbesondere dann günstig, wenn über das Hilfsfügeteil ein elektrischer Strom auf das Werkstück übertragen werden soll, beispielsweise wenn das Hilfsfügeteil als Masseanschlußbolzen im Blech einer Kraftfahrzeugkarosserie verwendet werden soll.

Vorzugsweise läßt man Material aus Bereichen ohne Hinterschneidung in Bereiche mit Hinterschneidung fließen. Für die Herstellung der Hinterschneidungsbereiche steht nun mehr Material zur Verfügung. Man kann mit anderen Worten das Material, das üblicherweise am gesamten Umfang der topfartigen Ausformung verfügbar ist, nun auf einige wenige Hinterschneidungsbereiche konzentrieren. Damit ist es möglich, mit der gleichen Materialmenge Hinterschneidungen senkrecht zur Druckrichtung weiter oder tiefer werden zu lassen. Man hat herausgefunden, daß die Festigkeit der Verbindung in einem stärkeren Maße von der Tiefe der Hinterschneidungen als von der Länge in Umfangsrichtung abhängig ist. Wenn man also die Hinterschneidungen auf Bereiche in Umfangsrichtung beschränkt, diese Bereiche dann aber mit einer größeren überdeckung im Hinterschneidungsbereich ausgestaltet, dann wird die Verbindung insgesamt fester, und zwar sowohl im Hinblick auf die Kopfzugfestigkeit als auch im Hinblick auf die Verdrehsicherheit.

Vorzugsweise erzeugt man auf der dem Hilfsfügeteil gegenüberliegenden Außenseite des Werkstücks Wandabschnitte, die parallel zur Druckrichtung verlaufen. Diese Ausgestaltung hat mehrere Vorteile. Zum einen ist das Entformen, d.h. das Herausnehmen des mit dem Hilfsfügeteil versehenen Werkstücks aus der entsprechenden Vorrichtung, beispielsweise einer Matrize, relativ einfach. In den Bereichen, wo die Außenseite parallel zur Druckrichtung verläuft, muß man keine Umformarbeit mehr leisten, um das Werkstück zu entnehmen. Es sind lediglich die Haftreibungskräfte zu überwinden. Zum anderen kann man gerade bei zumindest annähernd senkrechten Umfangswänden dafür sorgen, daß optimale Fließwege für die beiden Werkstoffe von Werkstück und Hilfsfügeteil in die Hinterschneidungsbereiche gegeben sind.

Vorteilhafterweise erzeugt man beim Drücken über das Werkstück eine Schließkraft auf mindestens ein Werkzeugteil und beim Abziehen der aus Werkstück und Hilfsfügeteil gebildeten Einheit eine Öffnungskraft auf das Werkzeugteil, das im Bereich einer Hinterschneidung angeordnet ist. Das Verfahren wird damit quasi selbst steuernd. Im Bereich der Ausnehmung befindet sich ein Werkzeugteil, das so ausgebildet ist, daß dann, wenn der Werkstoff des Werkstückes dort hineingedrückt wird, eine Hinterschneidung entsteht. Da dieses Werkzeugteil vom Werkstück in seiner Schließposition gehalten wird, kann das Werkzeugteil sich nicht öffnen. Anders sieht es aus, wenn man das Werkstück aus dem Werkzeug herauszieht. In diesem Fall entfällt der Druck auf das Werkzeugteil. Dieses kann sich dann öffnen und gibt das Werkstück frei. Zum Öffnen ist nur eine sehr kleine Kraft nötig. Beim Öffnen kann dementsprechend auch keine Rückverformung bewirkt werden.

Vorzugsweise werden drei oder mehr hinterschnittene Umfangsbereiche erzeugt. Damit läßt sich senkrecht zur Zugkraft eine allseitig abgestützte Verbindung erreichen. Je mehr Hinterschneidungsbereiche vorhanden sind, desto besser ist die Sicherung gegen Verdrehen.

Vorzugsweise bringt man den Druck auf das Hilfsfügeteil an einer Hilfsschulter auf. Dies ist insbesondere dann von Vorteil, wenn das Hilfsfügeteil mit einem Gewinde versehen ist. Die Hilfsschulter ist dann so positioniert, daß das Gewinde beim Aufbringen des Druckes nicht gestaucht oder auf andere Weise verformt wird.

Vorzugsweise ist die Hilfsschulter dem Werkstück benachbart angeordnet. Damit steht nur noch eine kleine Länge des Hilfsfügeteils zur Verfügung, in der das Hilfsfügeteil an sich verformt werden kann. In der übrigen Länge kann dann ein Bereich vorgesehen sein, der das Gewinde aufnimmt, das bei dieser Ausgestaltung eben nicht mehr verformt werden kann.

In einer bevorzugten Ausgestaltung ist vorgesehen, daß zwischen dem Werkstück und dem Hilfsfügeteil mindestens ein weiteres blechartiges Werkstück angeordnet wird, das ebenfalls topfartig mit in Umfangsrichtung begrenzten Hinterschneidungen verformt wird. Man kann das Hilfsfügeteil gleichzeitig verwenden, um eine Durchsetzfügeverbindung zu erzeugen. Das Hilfsfügeteil bildet dann einen "verlorenen Stempel", sichert also zusätzlich noch die Durchsetzfügeverbindung gegen Lösen. Für das weitere Werkstück gilt im Hinblick auf die Blechartigkeit das gleiche wie für das oben genannte erste Werkstück. Es muß sich allerdings nicht um das gleiche Material handeln. Beispielsweise kann man auf diese Weise ein Metallblech mit einem Kunststoffteil und dem Hilfsfügeteil verbinden. Die Verbindung der beiden blechartigen Bauteile weist zusätzlich eine außerordentlich große Scherzug- und Kopfzugfestigkeit auf. Darüber hinaus ist die Verbindung der beiden Bauteile dicht, weil keine Öffnungen oder Schnittfugen erzeugt werden.

Die Aufgabe wird durch eine Vorrichtung der eingangs genannten Art dadurch gelöst, dass die Umfangswand der Ausnehmung bewegliche Wandabschnitte aufweist, die an Hebeln angeordnet sind, wobei die Hebel durch Druck in Druckrichtung in eine Arbeitsposition bewegbar und dort festlegbar sind und Hinterschneidungsbereiche bilden und durch eine Bewegung der Einheit aus Werkstück und Hilfsfügeteil entgegen der Druckrichtung in eine Freigabeposition bewegbar sind, in der die Hinterschneidungsbereiche vollständig freigegeben sind, daß zwischen den beweglichen Wandabschnitten stationäre Wandabschnitte vorgesehen sind und daß die Hebel eine Außenseite aufweisen, die mit der Druckrichtung einen spitzen Winkel einschließt und an einer entsprechend geneigten Gegenfläche geführt ist, die entgegen der Druckrichtung nach außen verläuft.

Mit einer derartigen Fügevorrichtung erhält man zunächst einen relativ einfachen Aufbau der Matrize. Durch die Verwendung von Hebeln oder Fingern, die durch den Preßvorgang selbst in ihre Arbeitsposition gebracht und dort gehalten werden, spart man sich Hilfsmittel, wie Federn oder sonstige Vorspannmitteln, die erforderlich sind, um die Matrize in den geschlossenen Zustand zu versetzen, den man benötigt, um überhaupt eine Ausformung beginnen zu können. In dem Augenblick, wo das Werkstück auf die Matrize und über das Hilfsfügeteil mit Druck beaufschlagt wird, bewegen sich die Hebel in ihre Arbeitsposition. Sie werden also radial nach innen bewegt und stellen dann Hinterschneidungsbereiche zur Verfügung. Aus dieser Arbeitsposition können sie sich nicht herausbewegen, und zwar auch nicht unter dem Druck des einfließenden Werkstoffs, weil sie durch das Werkstück selbst in der Arbeitsposition festgehalten werden. Die durch die Hebel gebildeten Hinterschneidungen stellen nun einen Raum zur Verfügung, in den das Material des Werkstücks und des Fußes des Hilfsfügeteils hineinfließen kann. Hierbei kann man davon ausgehen, daß nicht nur das Material des Werkstücks in den Hinterschneidungsbereich hineinfließt, sondern auch das Material des Fußes des Hilfsfügeteils, so daß das Hilfsfügeteil mit dem Werkstück eine Hinterschneidung im Sinne einer formschlüssigen Verhakung bildet. Normalerweise würde nun bei einer derartigen Hinterschneidung, die auch auf der Matrizenseite erkennbar ist, das Herausnehmen des Werkstücks aus der Matrize ein gewisses Problem bedeuten. Erfindungsgemäß tritt dieses Problem aber nicht auf, weil beim Abheben des Werkstücks der entsprechende Hebel nach außen bewegt wird, so daß er in die Freigabeposition gelangen kann, wo er das Werkstück vollständig frei gibt. Hierbei muß der Hebel aber keine Federkräfte überwinden, so daß das Entnehmen des Werkstücks mit relativ geringem Aufwand erfolgen kann. Als weiterer Vorteil kommt hinzu, daß beim Entnehmen des Werkstücks aus der Matrize die Hebel nicht unter Druck an der Unterseite des Werkstücks kratzen, so daß entsprechende Spuren weitgehend vermieden werden. Dies schont nicht nur das Werkstück, sondern auch die entsprechenden Anlageflächen der Hebel.

Vorzugsweise weisen die Hebel eine im wesentlichen ebene Oberseite auf, die in der Arbeitsposition senkrecht zur Druckrichtung steht und in der gleichen Ebene wie die Oberseite der Matrize liegt. Damit wirkt die Druckkraft so, daß die Hebel lediglich in Schließrichtung belastet werden. Die Hebel müssen keine seitlichen Kräfte aufnehmen. Da sich das Werkstück sozusagen einer durchgehenden und ebenen Fläche gegenübersieht, wenn man von der Ausnehmung absieht, entstehen außerhalb des eigentlichen Verbindungsbereichs keine Markierungen in der Oberfläche des Werkstücks. Druckspitzen auf die Hebel werden vermieden. Die Belastung erfolgt in der Arbeitsposition relativ gleichmäßig, so daß die Hebel geschont werden und dementsprechend eine relativ hohe Lebensdauer aufweisen.

Vorzugsweise ist jeder Hebel als Winkelhebel ausgebildet. Die Druckkraft, die zum Bewegen und zum Halten der Hebel in die Arbeitsstellung verwendet wird, kann dann auf eine größere Fläche wirken. Die Hebelübersetzungsverhältnisse sind hier günstiger, so daß man auch mit einem relativ schwach dimensionierten Hebel die erforderlichen Kräfte aufnehmen kann.

Bevorzugterweise weist der Winkelhebel einen kurzen Arm, an dem der Wandabschnitt angeordnet ist und einen langen Arm auf, an der sich eine Schwenkachse oder ein Schwenkbereich befindet. Der Hebel ist also nach Art eines auf dem Kopf stehenden L ausgebildet, kann allerdings auch noch weitere Vorsprünge oder Ausnehmungen aufweisen. An der Stirnseite des kurzen Schenkels befindet sich der Wandabschnitt, der einen Teil der Seitenwand der Ausnehmung der Matrize und damit den Hinterschneidungsbereich bildet.

Wie oben angegeben, weist der Hebel eine Außenseite auf, die mit der Druckrichtung einen spitzen Winkel einschließt und an einer entsprechend geneigten Gegenfläche geführt ist, die entgegen der Druckrichtung nach außen verläuft. Diese Gegenfläche ist in dem Gehäuse angeordnet, in dem die Matrize angeordnet ist. Wenn nun die Druckkraft über das Werkstück auf den Hebel wirkt, dann wird der Hebel auf der geneigten Fläche in Druckrichtung verschoben und wandert dementsprechend radial einwärts, so daß er einen Hinterschneidungsbereich bildet. Der Hebel kann, auch wenn der Werkstoff des Werkstücks radial nach außen verdrängt wird, nicht nach oben oder radial nach außen ausweichen, weil er radial nach außen von der Gegenfläche festgehalten wird und eine Bewegung nach oben durch das aufliegende Werkstück verhindert wird. Je nachdem, wie stark die Gegenfläche und die Außenseite des Hebels geneigt sind, lassen sich hier sehr hohe Anpreßkräfte erzielen, so daß auch zum Umformen des Werkstücks entsprechend hohe Kräfte aufgebracht werden können.

Vorzugsweise sind mindestens drei Hebel in Umfangsrichtung der Ausnehmung verteilt angeordnet. Bei einer gleichförmigen Anordnung hat man bei dieser Ausgestaltung eine in alle Richtungen gleichmäßig belastbare Verbindung des Hilfsfügeteils mit dem Werkstück zu erwarten.

Bevorzugterweise sind zwischen den beweglichen Wandabschnitten stationäre Wandabschnitte vorgesehen, die im wesentlichen parallel zur Druckrichtung verlaufen. Damit ergeben sich entlang der Wand der Ausnehmung der Matrize nur einzelne Abschnitte, in denen eine Hinterschneidung vorliegt. In den übrigen Wandabschnitten ergibt sich eine zylinderförmige Ausformung des Werkstücks auf der dem Hilfsfügeteil gegenüberliegenden Seite. Dies ergibt eine Verdrehsicherung mit einer relativ hohen Festigkeit. Das Entformen, d.h. das Herausnehmen des Werkstücks aus der Matrize, wird vereinfacht. Man kann das Werkstück in den Bereichen, wo die Wandabschnitte parallel zur Druckrichtung verlaufen, einfach umgekehrt zur Druckrichtung aus der Matrize herausziehen. Lediglich in den übrigen Bereichen ist es erforderlich, die Hebel nach außen zu bewegen. Ein weiterer Vorteil liegt darin, wie im Zusammenhang mit dem Verfahren erläutert, daß für die Ausbildung der Hinterschneidungen mehr Material zur Verfügung steht. Damit ist es möglich, die Hinterschneidungsüberdeckung nach außen, d.h. senkrecht zur Druckrichtung, größer werden zu lassen. Diese Möglichkeit ergibt sich daraus, daß man aus den Bereichen mit stationären Wandabschnitten Material in die Hinterschneidungsbereiche hineinverdrängen kann.

Vorzugsweise weist die Matrize für jeden Hebel eine Herausfallsicherung auf. Diese Herausfallsicherung hat zwei Vorteile. Zum einen muß man beim Herausnehmen eines Werkstücks aus der Matrize nicht mehr darauf achten, daß die Hebel in der Matrize zurückbleiben. Diese werden vielmehr durch die Herausfallsicherung festgehalten. Zum anderen kann man nun die Matrize auch "über Kopf" verwenden, d.h. das Hilfsfügeteil in Schwerkraftrichtung gesehen von unten an das Werkstück zur Anlage bringen. Damit erreicht man eine höhere Flexibilität in Bezug auf die Montagelage beim Betrieb der Vorrichtung.

Vorteilhafterweise weist der Stempel eine Ausnehmung auf, in die ein Schaft des Hilfsfügeteils hineinragt und die von einer Druckfläche umgeben ist, wobei das Hilfsfügeteil eine Hilfsschulter aufweist, die an der Druckfläche anliegt. Damit kann man erreichen, daß das Hilfsfügeteil zwar durch den Stempel geführt wird. Die Belastung läßt sich aber auf Bereiche des Hilfsfügeteils beschränken, die außerhalb der Führung und damit des Stempels liegen. Insbesondere bei Verwendung von Gewinden auf dem Hilfsfügeteil wird damit eine unzulässige Verformung des Hilfsfügeteils vermieden.

Mit der Erfindung kann man bewirken, daß eine relativ hohe Verdrehsicherheit erreicht wird. Zusätzlich kann die Hinterschneidungstiefe, d.h. die Tiefe der formschlüssigen Verhakung, relativ groß gemacht werden. Das hierfür benötigte Material kann aus den Bereichen stammen, in denen keine Hinterschneidung vorliegt. Durch die Formgebung an den Wirkflächen der die Hinterschneidung bildenden Hebel können die Fließeigenschaften auch die Kombination aus Hilfsfügeteil und Werkstück optimiert werden. Die Größe und der Ort der formschlüssigen Verhakung können durch die Wahl der vorbestimmten Umfangsbereiche und der Hinterschneidungstiefe optimiert und definiert werden.

Die Erfindung wird im folgenden anhand von bevorzugten Ausführungsbeispielen in Verbindung mit der Zeichnung näher beschrieben. Hierin zeigen:
- Fig. 1: eine schematische Ansicht einer Vorrichtung zum Verbinden eines Hilfsfügeteils mit einem blechartigen Werkstück,
- Fig. 2: eine Draufsicht auf eine Matrize der Vorrichtung nach Fig. 1,
- Fig. 3: ein Hilfsfügeteil,
- Fig. 4: eine andere Ausführungsform eines Hilfsfügeteils,
- Fig. 5: ein Werkstück mit darin befestigten Hilfsfügeteilen,
- Fig. 6: eine schematische Darstellung der Verbindung zweier blechartiger Bauteile mit Hilfe von Hilfsfügeteilen und
- Fig. 7: eine Darstellung entsprechend Fig. 1 mit einem anderen Hilfsfilgeteil.
- Fig. 8: eine gegenüber Fig. 1 abgewandelte Vorrichtung,
- Fig. 9: eine Ansicht entsprechend Fig. 2 und
- Fig. 10: verschiedene Stadien beim Arbeiten mit der Vorrichtung nach Fig. 8.

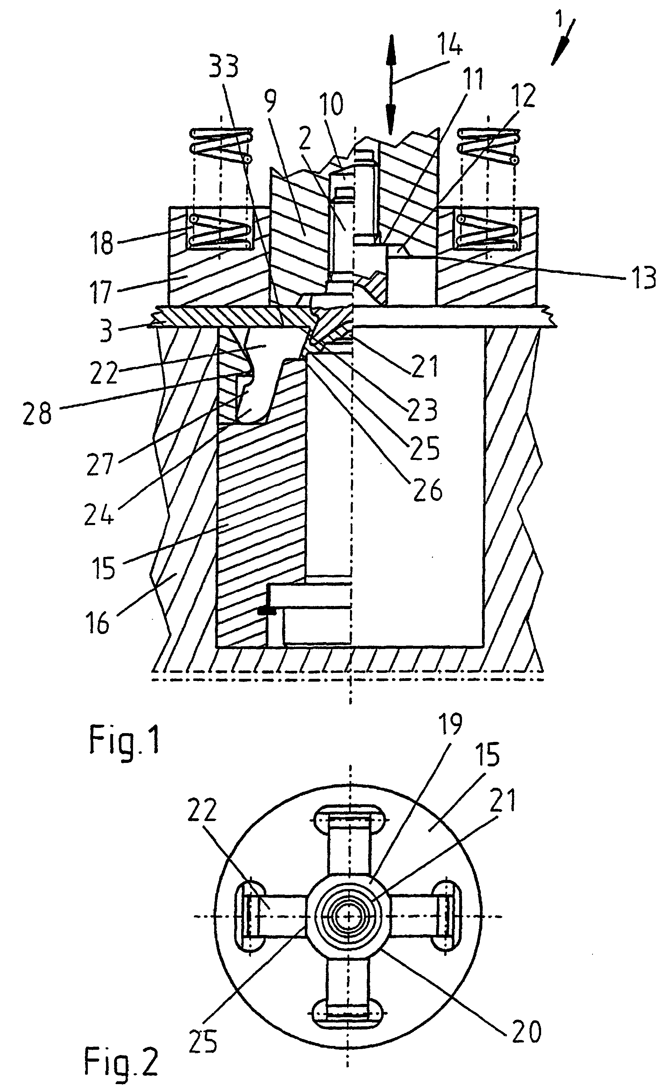

Fig. 1 zeigt eine Vorrichtung 1 zum Verbinden eines Hilfsfügeteils 2 mit einem blechartigen Werkstück 3.

Das blechartige Werkstück 3 kann aus Metallblech gebildet sein. Es kann sich aber auch um ein zumindest abschnittsweise plattenartiges Werkstück aus einem Kunststoffmaterial handeln, das ähnlich wie Metallbleche verformbar ist.

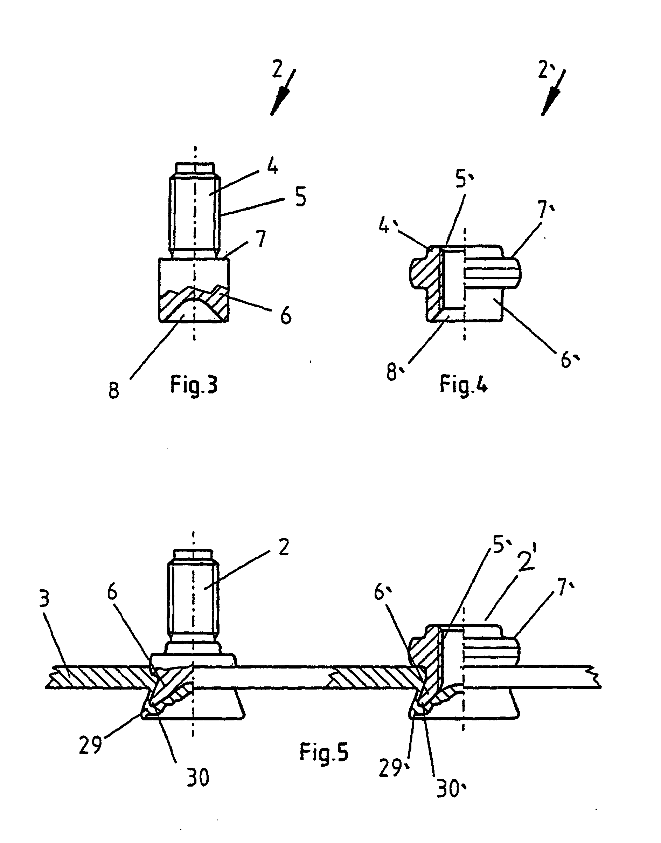

Beispiele für Hilfsfügeteile sind in den Fig. 3 und 4 dargestellt, wobei das Hilfsfügeteil der Fig. 3 dem der Fig. 1 entspricht.

Das Hilfsfügeteil, das in Fig. 3 dargestellt ist, umfaßt einen Schaft 4 mit einem Außengewinde 5, bildet also einen Gewindebolzen. Der Schaft 4 ist mit einem Fuß 6 verbunden, der einen etwas größeren Durchmesser als der Schaft 4 aufweist. Die Durchmesserdifferenz bildet eine Hilfsschulter 7. Der Fuß 6 hat einen im wesentlichen zylindrischen Außenumfang. An seiner Bodenseite weist er eine Ausnehmung 8 auf, die, wie später im Zusammenhang mit der Verfahrensweise erläutert werden wird, eine Umformung erleichtert.

Fig. 4 zeigt eine alternative Ausgestaltung eines Hilfsfügeteils 2', bei der gleiche Teile mit gleichen Bezugszeichen versehen sind. Der Schaft 4' weist in diesem Fall ein Innengewinde 5' auf, so daß das Hilfsfügeteil 2' ein Mutternelement bildet, in das eine Schraube eingesetzt werden kann, um die Schraube mit dem Werkstück 3 zu verbinden.

Anstelle der beiden dargestellten Hilfsfügeteile 2, 2' können natürlich auch andere Hilfsfügeteile verwendet werden, solange diese ein Befestigungsprofil, z.B. eine oder mehrere Rillen, aufweisen und/oder aus dem Werkstück 3 so herausragen, daß sie noch eine Befestigungsfläche zur Verfügung stellen.

Die Vorrichtung 1, mit der das Hilfsfügeteil 2 mit dem Werkstück 3 verbunden wird, weist einen Stempel 9 auf, der eine Bohrung 10 enthält, in die das Hilfsfügeteil 2 eingesteckt werden kann. Hierbei ist der Durchmesser der Bohrung 10 an den Außendurchmesser des Schaftes 4 angepaßt, so daB das Hilfsfügeteil 2 mit geringem Spiel im Stempel 9 aufgenommen ist. Um die Bohrung 10 herum ist eine Druckfläche 11 angeordnet, mit der der Stempel 9 auf die Hilfsschulter 7 des Hilfsfügeteils 2 drückt.

Die Druckfläche 11 ist in einer Vertiefung 12 angeordnet, die von einem umlaufenden Rand 13 umgeben ist. Der Stempel 9 ist in Richtung eines Doppelpfeils 14 bewegbar. Für die nachfolgende Erläuterung wird die Orientierung der Fig. 1 verwendet, d.h. der Stempel 9 ist nach oben und nach unten bewegbar. Die Druckrichtung ist nach unten gerichtet.

Die Vorrichtung 1 weist ferner eine Matrize 15 auf, die . in einem Matrizenhalter 16 angeordnet ist. Das Werkstück 3 kann mit Hilfe von Niederhaltern 17, die unter der Wirkung von Federn 18 stehen, auf die Matrize 15 gedrückt werden.

Die Matrize 15 weist eine Ausnehmung 19 auf, die von ihrer Grundform her zylindrisch ausgebildet ist. Die Ausnehmung 19 ist also umgeben von Wandabschnitten 20, die parallel zur Druckrichtung 14 verlaufen und die Form einer Zylindermantelfläche haben. Am Boden der Ausnehmung 19 ist ein stufenförmiger Vorsprung 21 vorgesehen, der, wie weiter unten erläutert werden wird, das Fließen des Materials beim Verbinden von Hilfsfügeteil 2 und Werkstück 3 erleichtert.

Die zylinderförmige Umfangswand 20 ist unterbrochen von Hebeln 22. Ein derartiger Hebel 22 ist in Fig. 1 in Arbeitsstellung dargestellt. In dieser Stellung schließt seine Oberseite 33 bündig mit der Oberseite der Matrize 15 ab.

Der Hebel 22 hat die Form eines auf den Kopf gestellten L mit einem kurzen Schenkel 23 und einem langen Schenkel 24. In der Arbeitsposition liegt er mit beiden Schenkeln an der Matrize 15 an, ist also vollständig abgestützt.

Der kurze Schenkel 23 bildet mit seiner Stirnseite 25 einen Teil der Umfangswand der Ausnehmung 19. In der Arbeitsposition ist diese Stirnseite 25 geneigt, öffnet sich also nach unten hin etwas, so daß das Material des Werkstücks 3 in einen Freiraum 26 hineinfließen kann, der durch die geneigte Stirnseite 25 des Hebels 22 gebildet wird.

In Umfangsrichtung sind vier Hebel 22 vorgesehen, die die zylindrische Umfangswand 20 der Ausnehmung 19 unterbrechen. Dementsprechend werden beim Eindrücken des Hilfsfügeteils 2 in das Werkstück 3 insgesamt vier Hinterschneidungsbereiche erzeugt.

Wie aus Fig. 1 zu erkennen ist, ist der Hebel 22 in der Matrize 15 beweglich gelagert. Er weist an seiner "Rückseite", d.h. der Seite, die der Ausnehmung 19 abgewandt ist, eine Schulter 27 auf, so daß er in der Matrize 15 angehoben werden kann, bis die Schulter 27 an einem Vorsprung 28 der Matrize zur Anlage kommt. Der Vorsprung 28 bildet mit der Schulter 27 also eine Herausfallsicherung. Der Vorsprung 28 dient auch als Drehoder Kippunkt für den Hebel 22 wobei der Hebel 22 beim Kippen nach außen auch an dem Vorsprung 28 entlang gleiten kann.

Beim Anheben des Hebels 22 kann der Hebel 22 aufklappen, d.h. die Stirnseite 25 kann sich nach oben und gleichzeitig nach außen bewegen, so daß der kurze Schenkel 23 des Hebels 22 die Ausnehmung 19 vollständig frei gibt, so daß das Werkstück 3 aus der Matrize 15 entfernt werden kann.

Zur Befestigung des Hilfsfügeteils 2 im Werkstück 3 wird das Hilfsfügeteil 2 in die Ausnehmung 10 des Stempels 9 eingesetzt. Das Werkstück 3 wird mit Hilfe der Niederhalter 17 auf der Matrize 15 festgehalten. Diese Ausgangsposition ist in der rechten Hälfte der Fig. 1 dargestellt.

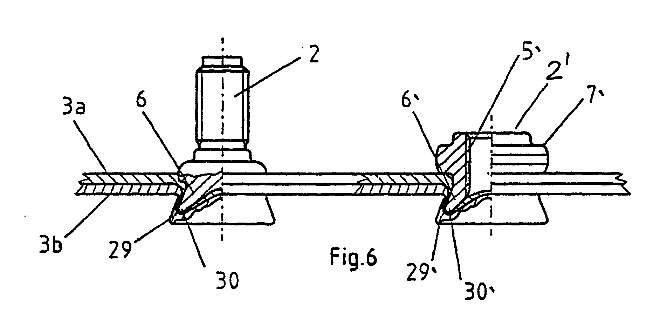

Sodann wird der Stempel 9 auf die Matrize 15 abgesenkt. Der Stempel 9 drückt das Hilfsfügeteil an seiner Hilfsschulter 7 nach unten. Hierbei wird das Werkstück 3 verformt. In den Abschnitten der Ausnehmung 19, die von der Zylinderwand 20 begrenzt sind, wird eine becheroder topfartige Ausformung erzeugt. Aufgrund der geneigten Stirnseite 25 des Hebels 22 fließt aber ein Teil des Materials auch in den Freiraum 26 und bildet damit, wie in Fig. 5 zu erkennen ist, Hinterschneidungen 29.

Bei diesem Umformvorgang wird auch der Fuß 6 des Hilfsfügeteils 2 verformt. Im Bereich der Hinterschneidungen 29 bildet der Fuß 6 Hinterschneidungen 30 mit dem Werkstück 3. Diese Verformung wird unterstützt durch den Vorsprung 21, der das Material des Werkstücks 3 in die Ausformung 8 des Fußes 6 des Hilfsfügeteils 2 eindrückt und beim Fortsetzen des Verbindungsvorganges dafür sorgt, daß das Material des Fußes 6 die Hinterschneidungen 30 bildet.

Da der Stempel 9 nur auf die Hilfsschulter 7 des Hilfsfügeteils 2 wirkt, wird das Gewinde 5 nicht verformt. Die Druckbewegung hört auf, wenn die umlaufende Wand 13 des Stempels 9 auf dem Werkstück 3 zur Anlage kommt.

Dadurch, daß die Hinterschneidungen 29, 30 in Umfangsrichtung nicht durchgehen, sondern unterbrochen sind, ist es möglich, Material aus den zylindrischen Abschnitten in die Hinterschneidungen 29, 30 fließen zu lassen, so daß hier die Hinterschneidungstiefe erhöht werden kann.

Aus Fig. 5 ist zu erkennen, daß das als Mutter ausgebildete Hilfsfügeteil 2' (Fig. 4) in ähnlicher Weise in das Werkstück 3 eingesetzt werden kann, wie das als Bolzen ausgebildete Hilfsfügeteil 2. In beiden Fällen ergibt sich die entsprechende Hinterschneidung 30, 30' am Fuß 6, 6', die mit entsprechenden Hinterschneidungen 29, 29' am Werkstück 3 zusammenwirkt. Damit ergibt sich nicht nur eine hohe Kopfzug- und Scherfestigkeit bei der Verbindung des Hilfsfügeteils 2, 2' im Werkstück 3, sondern aufgrund der Tatsache, daß die Hinterschneidungen in Umfangsrichtung begrenzt sind, ergibt sich auch ein relativ großer Widerstand gegen ein Verdrehen.

Die dargestellten Hilfsfügeteile 2, 2' können auch ohne Gewinde ausgebildet werden. Bei einem Bolzen reichen gegebenenfalls auch Rillungen aus oder andere Maßnahmen, mit denen die Oberfläche griffiger gemacht werden kann. Bei derartigen Hilfsfügeteilen reicht es in vielen Fällen aus, ein klemmendes Element aufzusetzen, um ein zu befestigendes Teil am Hilfsfügeteil 2 festzulegen. Ahnliches gilt für die in Fig.4 und 5 rechts dargestellten Hilfsfügeteile 2', bei denen nicht unbedingt ein Innengewinde 5' erforderlich ist.

In der rechten Hälfte der Fig. 5 ist erkennbar, daß das Verbinden des als Mutter ausgebildeten Hilfsfügeteils 2' einen zusätzlichen Vorteil bildet. Es ergibt sich nämlich eine dichte Verbindung zwischen der Mutter und dem Werkstück 3, so daß keine zusätzlichen Maßnahmen für eine Abdichtung erforderlich sind.

Fig. 6 zeigt eine der Darstellungen der Fig. 5 entsprechende Verbindung von Hilfsfügeteilen 2, 2' mit nicht nur einem Werkstück 3, sondern zwei Werkstücken 3a, 3b. Diese Werkstücke werden durch eine Durchsetzfügeverbindung gehalten, wobei das Hilfsfügeteil 2, 2' als verlorener Stempel in den Werkstücken 3a, 3b verbleibt. Die Werkstücke 3a, 3b sind mit einer relativ hohen Kopfzugund Scherfestigkeit miteinander verbunden. Das Hilfsfügeteil 2, 2' ist zuverlässig festgehalten.

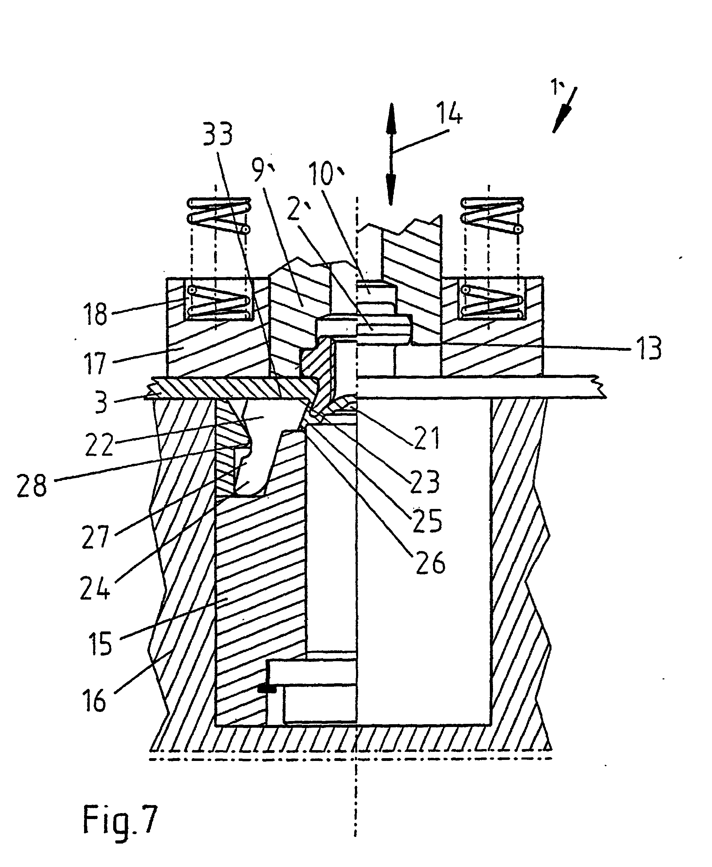

Fig. 7 zeigt eine Vorrichtung entsprechend der Darstellung nach Fig. 1. Gleiche Teile sind mit den gleichen Bezugszeichen versehen. Geändert hat sich lediglich der Stempel 9', um das Hilfsfügeteil 2' aufzunehmen. Aus Fig. 7 ist auch erkennbar, daß man bei dem Hilfsfügeteil 2' auf eine Hilfsschulter 7' drücken kann, die nicht unterhalb des Gewindes, sondern radial neben dem Gewinde angeordnet ist. Aufgrund der relativ großen Materialdicke wird durch den Druck das Gewinde aber nicht verformt, sondern behält seine Gewindeleerenhaltigkeit.

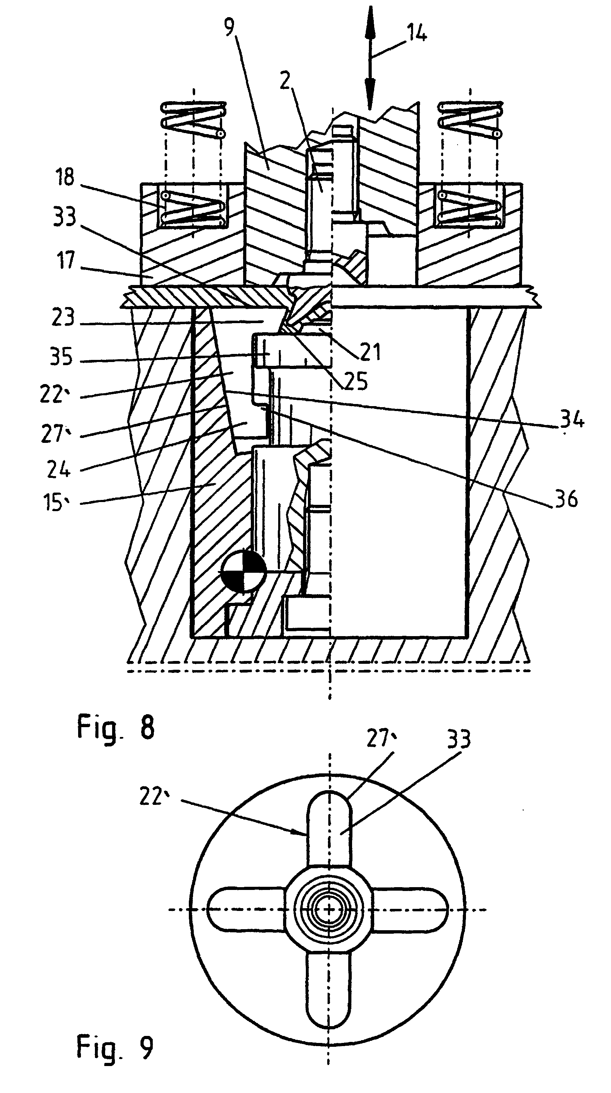

Fig. 8 zeigt eine gegenüber Fig. 1 abgewandelte Ausführungsform einer Vorrichtung zum Verbinden des Hilfsfügeteils 2 mit dem blechartigen Werkstück 3. Gleiche Teile sind mit gleichen Bezugszeichen versehen, während entsprechende Elemente mit gestrichenen Bezugszeichen gekennzeichnet sind.

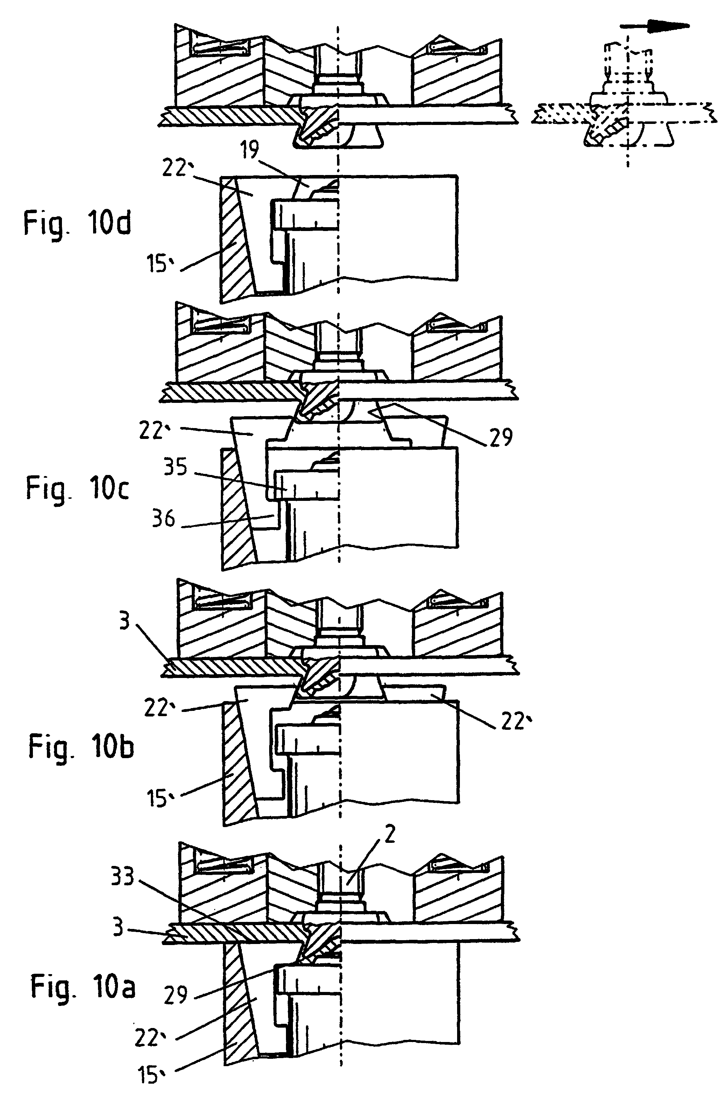

Gegenüber der Ausbildung nach Fig. 1 hat sich im Grunde genommen nur die Form der Hebel 22' und in der Matrize 15' geändert. Der Hebel 22' weist nach wie vor einen kurzen Schenkel 23 mit Oberseite 33 und Stirnseite 25 auf, wobei die Stirnseite 25 die beweglichen Hinterschneidungsbereiche bildet. Der kurze Schenkel 23 ist auch mit einem langen Schenkel 24 verbunden. Dieser Schenkel 24 weist jedoch eine Außenseite 27' auf, die man mit der Schulter 27 beim Hebel nach Fig. 1 vergleichen kann, die im Schnitt nach Fig. 8 eine Gerade bildet. Im Querschnitt kann sie natürlich auch, wie in Fig. 9 zu erkennen ist, halbkreisförmig abgerundet sein. Diese Außenseite 27' verläuft nicht parallel zur Druckrichtung 14, sondern ist zu ihr geneigt, schließt mit der Druckrichtung 14 also einen spitzen Winkel ein, wobei die entsprechende Wand 34 der Matrize so gerichtet ist, daß sich die entsprechende Ausnehmung, die von der Wand 34 begrenzt ist, radial nach oben, d.h. zum Stempel 9 hin, öffnet. Dementsprechend wird der Hebel 22' radial nach außen bewegt, wenn er angehoben wird. Diese Bewegung wird begrenzt durch einen Ring 35, der unterhalb des Vorsprungs angeordnet ist und an den ein Hebelvorsprung 36 am unteren Ende des Hebels 22' zur Anlage kommt, wenn der Hebel 22' weit genug nach oben herausgezogen worden ist. Dies soll anhand von Fig. 10 erläutert werden. Fig. 10A stellt die Situation dar, die sich ergibt, wenn das Hilfsfilgeteil 2 in das Werkstück 3 hineingepreßt worden ist und sich entsprechende Hinterschneidungsbereiche 29 gebildet haben. Das Werkstück 3 drückt hierbei auf die Oberseite 33 des Hebels 22', so daß der Hebel 22' in der Matrize 15' festgehalten wird und nicht radial ausweichen kann.

Nach Beendigung des Fügevorganges wird das Werkstück 3 angehoben. Da der Hinterschneidungsbereich 29 im Grunde nicht durch die Öffnung paßt, die die Hebel 22' an ihre Oberseite zwischen sich freilassen, werden die Hebel 22' mit angehoben und in Druckrichtung (im dargestellten Ausführungsbeispiel in Vertikalrichtung) aus der Matrize 15' herausgezogen. Hierbei wandern sie radial nach außen, wie dies in Fig. 10b zu erkennen ist.

Am Ende dieser Bewegung kommt der Hebelvorsprung 36 zur Anlage an den Ring 35. Diese beiden Teile bilden also zusammen eine Herausfallsicherung. Der Ring 35 ist so positioniert, daß am Ende der Bewegung die Öffnung zwischen zwei gegenüberstehenden Hebeln 22' genau so groß ist, daß die Hinterschneidungsbereiche 29 herausgezogen werden können. Dies ist in Fig. 10c zu erkennen.

Fig. 10d zeigt den Zustand, nachdem das Werkstück 3 vollständig herausgezogen worden ist. In diesem Augenblick können die Hebel 22' wieder zurück in die Matrize 15' fallen, so daß die Ausnehmung 19 mit den durch die Hebel 22' gebildeten beweglichen Seitenwänden wieder für einen neuen Fügevorgang zur Verfügung steht.

## Patentansprüche

1. Verfahren zum Befestigen eines Hilfsfügeteils (2; 2') an einem blechartigen Werkstück (3; 3a, 3b), bei dem das Hilfsfügeteil mit einem Fuß (6; 6') von einer Seite in das auf einer eine Ausnehmung (19) aufweisenden Matrize (15) gehaltene Werkstück (3; 3a; 3b) eingedrückt wird und dieses topfartig verformt, **dadurch gekennzeichnet, daß** die Ausnehmung (19) der Matrize Wandabschnitte (20) aufweist, die parallel zur Druckrichtung (14) verlaufen und unterbrochen ist von Matrizenteilen (Hebeln 22, 22') die Hinterschneidungen (26) bilden, in die Material des Fußes (6; 6') und des Werkstücks (3; 3a, 3b) fließt und Hinterschneidungsbereiche (29, 30) des Fußes und des Werkstücks bildet, die in Umfangsrichtung begrenzt sind.

2. Verfahren nach Anspruch 1, **dadurch gekennzeichnet, daß** man Material aus Bereichen ohne Hinterschneidung in Bereiche mit Hinterschneidung (29, 30) fließen läßt.

3. Verfahren nach Anspruch 1 oder 2, **dadurch gekennzeichnet, daß** man auf der dem Hilfsfügeteil (2; 2') gegenüberliegenden Außenseite des Werkstücks (3; 3a; 3b) Wandabschnitte erzeugt, die parallel zur Druckrichtung (14) verlaufen.

4. Verfahren nach einem der Ansprüche 1 bis 3, **dadurch gekennzeichnet, daß** man beim Drücken über das Werkstück (3; 3a, 3b) eine Schließkraft auf mindestens ein Werkzeugteil (22; 22') und beim Abziehen der aus Werkstück und Hilfsfügeteil gebildeten Einheit eine Öffnungskraft auf das Werkzeugteil (22; 22') erzeugt, das im Bereich einer Hinterschneidung (29, 30) angeordnet ist.

5. Verfahren nach einem der Ansprüche 1 bis 4, **dadurch gekennzeichnet, daß** drei oder mehr Hinterschneidungsbereiche (29; 30) erzeugt werden.

6. Verfahren nach einem der Ansprüche 1 bis 5, **dadurch gekennzeichnet, daß** man den Druck auf das Hilfsfügeteil (2; 2') an einer Hilfsschulter (7; 7') aufbringt.

7. Verfahren nach Anspruch 6, **dadurch gekennzeichnet, daß** die Hilfsschulter (7) dem Werkstück benachbart. angeordnet ist.

8. Verfahren nach einem der Ansprüche 1 bis 7, **dadurch gekennzeichnet, daß** zwischen dem Werkstück (3a) und dem Hilfsfügeteil (2; 2')mindestens ein weiteres blechartiges Werkstück (36) angeordnet wird, das ebenfalls topfartig mit in Umfangsrichtung begrenzten Hinterschneidungen verformt wird.

9. Vorrichtung zum Befestigen eines Hilfsfügeteils (2; 2') an einem blechartigen Werkstück (3; 3a, 3b) mit einer Matrize (15), die eine Ausnehmung (19) aufweist, und einem Halter (9) für das Hilfsfügeteil (2; 2'), der in Ausrichtung zu der Ausnehmung (19) angeordnet und in eine Druckrichtung (14) relativ zur Matrize bewegbar ist, **dadurch gekennzeichnet, daß** die Umfangswand (20) der Ausnehmung (19) bewegliche Wandabschnitte (25) aufweist, die an Hebeln (22; 22') angeordnet sind, wobei die Hebel (22; 22') durch Druck in Druckrichtung (14) in eine Arbeitsposition bewegbar und dort festlegbar sind und Hinterschneidungsbereiche (26) bilden und durch eine Bewegung der Einheit aus Werkstück (3; 3a, 3b) und Hilfsfügeteil (2; 2') entgegen der Druckrichtung (14) in eine Freigabeposition bewegbar sind, in der die Hinterschneidungsbereiche (26) vollständig freigegeben sind, daß zwischen den beweglichen Wandabschnitten (25) stationäre Wandabschnitte (20) vorgesehen sind und daß die Hebel eine Außenseite (27') aufweisen, die mit der Druckrichtung (14) einen spitzen Winkel einschließt und an einer entsprechend geneigten Gegenfläche (34) geführt ist, die entgegen der Druckrichtung (14) nach außen verläuft.

10. Vorrichtung nach Anspruch 9, **dadurch gekennzeichnet, daß** die Hebel (22) eine im wesentlichen ebene Oberseite (33) aufweisen, die in der Arbeitsposition senkrecht zur Druckrichtung (14) steht und in der gleichen Ebene wie die Oberseite der Matrize (19) liegt.

11. Vorrichtung nach Anspruch 9 oder 10, **dadurch gekennzeichnet, daß** jeder Hebel (22) als Winkelhebel 20 ausgebildet ist.

12. Vorrichtung nach Anspruch 11, **dadurch gekennzeichnet, daß** der Winkelhebel einen kurzen Arm (23), an dem der Wandabschnitt (25) angeordnet ist und einen langen Arm (24) aufweist, an der sich eine Schwenkachse oder ein Schwenkbereich befindet.

13. Vorrichtung nach einem der Ansprüche 9 bis 12, **dadurch gekennzeichnet, daß** mindestens drei Hebel (22; 22') in Umfangsrichtung der Ausnehmung (19) verteilt angeordnet sind.

14. Vorrichtung nach einem der Ansprüche 9 bis 13, **dadurch gekennzeichnet, daß** die stationären Wandabschnitte (20) im wesentlichen parallel zur Druckrichtung (14) verlaufen.

15. Vorrichtung nach einem der Ansprüche 9 bis 14, **dadurch gekennzeichnet, daß** die Matrize (15) für jeden Hebel (22; 22') eine Herausfallsicherung (35, 36) aufweist.

16. Vorrichtung nach Anspruch 15, **dadurch gekennzeichnet, dass** die Herausfallsicherung durch einen Ringvorsprung (35) an einem mittleren Pfosten der Matrize gebildet ist, der mit einem Hebelvorsprung (36) am unteren Ende jedes Hebels (22') zur Anlage kommt, wenn der Hebel weit genug aus der Matrize herausgezogen ist.

17. Vorrichtung nach einem der Ansprüche 9 bis 16, **dadurch gekennzeichnet, daß** der Stempel (9) eine Ausnehmung (10) aufweist, in die ein Schaft (4, 4') des Hilfsfügeteils (2, 2') hineinragt und die von einer Druckfläche (11) umgeben ist, wobei das Hilfsfügeteil (2; 2') eine Hilfsschulter (7; 7') aufweist, die an der Druckfläche (11) anliegt.

18. Vorrichtung nach einem der Ansprüche 9 bis 17, **dadurch gekennzeichnet, daß** die Matrize (15) am Boden der Ausnehmung (19) einen Vorsprung (21) aufweist, der das Material des Werkstücks (3; 3a, 3b) in eine Ausformung (8; 8') des Fußes (6; 6') des Hilfsfügeteils (2; 2') eindrückt und dafür sorgt, daß das Material des Fußes die Hinterschneidungsbereiche (30) bildet.

## Claims

1. Method of fastening an auxiliary joining element (2; 2') to a sheet-metal-like workpiece (3; 3a, 3b) in which the auxiliary joining element has a foot (6; 6') which is pressed from one side into the workpiece (3; 3a, 3b) held on a die (15) having a recess (19) and deforms this workpiece in pot-like manner, **characterized in that** the recess (19) of the die has wall sections (20) which extend parallel to the pressing direction (14) and is interrupted by die parts (levers 22; 22') which form undercuts (26) into which the material of the foot (6; 6') and of the workpiece (3; 3a, 3b) flows and forms undercut regions (29, 30) of the foot and of the workpiece which are restricted in the peripheral direction.

2. Method in accordance with claim 1, **characterized in that** one allows the material to flow from regions without undercut into regions with undercut (29, 30).

3. Method in accordance with claim 1 or claim 2, **characterized in that** one produces wall sections at the outer side of the workpiece (3; 3a, 3b) opposite to the auxiliary joining element (2; 2') which extend parallel to the direction of pressing (14).

4. Method in accordance with any one of the claims 1 to 3, **characterized in that**, when pressing via the workpiece (3; 3a, 3b), a closing force is produced on at least one tool part (22; 22') and, on withdrawing the unit formed by the workpiece and the auxiliary joining element, an opening force is exerted on the tool part (22; 22') which is arranged in the region of an undercut (29, 30).

5. Method in accordance with any one of the claims 1 to 4, **characterized in that** three or more undercut regions (29, 30) are produced.

6. Method in accordance with any one of the claims 1 to 5, **characterized in that** one applies the pressure on the auxiliary joining element (2; 2') at an auxiliary shoulder (7; 7').

7. Method in accordance with claim 6, **characterized in that** the auxiliary shoulder (7) is arranged adjacent to the workpiece.

8. Method in accordance with any one of the claims 1 to 7, **characterized in that** at least one further sheet-metal-like workpiece (36) is arranged between the workpiece (3a) and the auxiliary joining element (2; 2') which is likewise deformed in pot-like manner with undercuts restricted in the peripheral direction.

9. Apparatus for the fastening of an auxiliary joining element (2; 2') to a sheet-metal-like workpiece (3; 3a, 3b) having a die (15) which has a recess (19), and a holder (9) for the auxiliary joining element (2; 2'), the holder being arranged in alignment with the recess (19) and being movable in a pressing direction (14) relative to the die, **characterized in that** the peripheral wall (20) of the recess (19) has movable wall sections (25) which are arranged on levers (22; 22') with the levers (22) being movable by pressure in the pressing direction (14) into a working position and being fixable there and forming undercut regions (26) and being movable by a movement of the unit comprising workpiece (3; 3a, 3b) and auxiliary joining element (2; 2') opposite to the pressing direction (14) into a release position in which the undercut regions (26) are fully released; **in that** stationary wall sections (20) are provided between the movable wall sections (25); and **in that** the levers have an outer side (27') which includes an acute angle with the pressing direction (14) and is guided on a correspondingly inclined counter surface (34), which extends outwardly opposite to the pressing direction (14).

10. Apparatus in accordance with claim 9, **characterized in that** the levers (22) have a substantially planar top side (33) which in the working position stands perpendicular to the pressing direction (14) and lies in the same plane as the top side of the die (19).

11. Apparatus in accordance with claim 9 or claim 10, **characterized in that** each lever (22) is formed as a cranked lever (20).

12. Apparatus in accordance with claim 11, **characterized in that** the cranked lever has a short arm (23), on which the wall section (25) is provided and a long arm (24) at which a pivot axis or a pivot region is located.

13. Apparatus in accordance with any one of the claims 9 to 12, **characterized in that** at least three levers (22; 22') are arranged distributed in the peripheral direction of the recess (19).

14. Apparatus in accordance with any one of the claims 9 to 13, **characterized in that** the stationary wall sections (20) extend substantially parallel to the pressing direction (14).

15. Apparatus in accordance with any one of the claims 9 to 14, **characterized in that** the die (15) has a security (35, 36) against drop-out for each lever (22; 22').

16. Apparatus in accordance with claim 15, **characterized in that** the security against drop-out is formed by an annular projection (35) at a middle post of the die which comes into contact with a lever projection (36) at the lower end of each lever (22') when the lever is withdrawn far enough out of the die.

17. Apparatus in accordance with any one of the claims 9 to 16, **characterized in that** the plunger (9) has a recess (10) into which a shaft (4, 4') of the auxiliary joining elements (2; 2') projects and is surrounded by a pressure surface (11), with the auxiliary joining element (2; 2') having an auxiliary shoulder (7; 7') which contacts the pressing surface (11).

18. Apparatus in accordance with one of the claims 9.to 17, **characterized in that** the die (15) has a projection (21) at the base of the recess, which presses the material of the workpiece (3; 3a, 3b) into an outwardly directed projection (8; 8') of the foot (6; 6') of the auxiliary joining element (2; 2') and ensures that the material of the foot forms the undercut regions (30).

## Revendications

1. Procédé pour fixer un élément d'assemblage auxiliaire (2 ; 2') sur une pièce à oeuvrer en tôle (3 ; 3a, 3b), dans lequel l'élément d'assemblage auxiliaire est enfoncé par un pied (6 ; 6') depuis un côté dans la pièce à oeuvrer (3 ; 3a ; 3b) tenue sur une matrice (15) qui présente un évidement (19) et déforme cette pièce à oeuvrer à la manière d'un godet, **caractérisé en ce que** l'évidement (19) de la matrice présente des tronçons de paroi (20) qui s'étendent parallèlement à la direction d'enfoncement (14), et cet évidement est interrompu par des parties de matrice (leviers 22, 22') qui forment des contre-dépouilles (26) dans lesquelles flue le matériau du pied (6 ; 6') et de la pièce à oeuvrer (3 ; 3a, 3b) et forme des zones en contre-dépouille (29, 30) du pied et de la pièce à oeuvrer qui sont limitées en direction périphérique.

2. Procédé selon la revendication 1, **caractérisé en ce que** l'on laisse fluer du matériau provenant de zones sans contre-dépouille vers des zones avec contre-dépouille (29, 30).

3. Procédé selon l'une ou l'autre des revendications 1 et 2, **caractérisé en ce que** l'on produit sur le côté extérieur de la pièce à oeuvrer (3 ; 3a ; 3b) à l'opposé de l'élément d'assemblage auxiliaire (2 ; 2') des tronçons de paroi qui s'étendent parallèlement à la direction d'enfoncement (14).

4. Procédé selon l'une des revendications 1 à 3, **caractérisé en ce que** l'on engendre lors de l'enfoncement via la pièce à oeuvrer (3 ; 3a, 3b) une force de fermeture sur au moins une partie d'outil (22 ; 22') et lors de l'extraction de l'unité formée par la pièce à oeuvrer et par l'élément d'assemblage auxiliaire une force d'ouverture sur la partie d'outil (22 ; 22') qui est agencée dans la zone d'une contre-dépouille (29, 30).

5. Procédé selon l'une des revendications 1 à 4, **caractérisé en ce que** l'on engendre trois zones en contre-dépouille (29 ; 30) ou plus.

6. Procédé selon l'une des revendications 1 à 5, **caractérisé en ce que** l'on applique la pression sur l'élément d'assemblage auxiliaire (2 ; 2') au niveau d'un épaulement auxiliaire (7 ; 7').

7. Procédé selon la revendication 6, **caractérisé en ce que** l'épaulement auxiliaire (9) est agencé au voisinage de la pièce à oeuvrer.

8. Procédé selon l'une des revendications 1 à 7, **caractérisé en ce que** l'on agence entre la pièce à oeuvrer (3a) et l'élément d'assemblage auxiliaire (2 ; 2') au moins une autre pièce à oeuvrer en tôle (36), que l'on déforme également en forme de godet avec des contre-dépouilles limitées en direction périphérique.

9. Appareil pour fixer un élément d'assemblage auxiliaire (2 ; 2') sur une pièce à oeuvrer en tôle (3 ; 3a, 3b) comprenant une matrice (15) qui présente un évidement (19), et un support (9) pour l'élément d'assemblage auxiliaire (2 ; 2'), lequel est agencé en alignement par rapport à l'évidement (19) et déplaçable par rapport à la matrice dans une direction d'enfoncement (14), **caractérisé en ce que** la paroi périphérique (20) de l'évidement (19) présente des tronçons de paroi mobiles qui sont agencés sur des leviers (22 ; 22'), lesdits leviers (22 ; 22') étant déplaçables en exerçant une pression dans la direction d'enfoncement (14) jusque dans une position de travail et susceptibles d'être immobilisés dans celle-ci en formant des zones en contre-dépouille (26), et sont déplaçables par un déplacement de l'unité formée par la pièce à oeuvrer (3 ; 3a, 3b) et par l'élément d'assemblage auxiliaire (2 ; 2') à l'encontre de la direction d'enfoncement (14) jusque dans une position de libération dans laquelle les zones en contre-dépouille (26) sont complètement dégagées, **en ce que** des tronçons de paroi stationnaires (20) sont prévus entre les tronçons de paroi (25) déplaçables, et **en ce que** les leviers présentent un côté extérieur (27') qui forme un angle aigu avec la direction d'enfoncement (14) et qui est guidé sur une contre-surface (34) d'inclinaison correspondante, laquelle s'étend vers l'extérieur à l'encontre de la direction d'enfoncement (14).

10. Appareil selon la revendication 9, **caractérisé en ce que** les leviers (22) présentent une face supérieure (33) essentiellement plane, laquelle est perpendiculaire à la direction d'enfoncement (14) dans la position de travail et se trouve dans le même plan que la face supérieure de la matrice (19).

11. Appareil selon l'une ou l'autre des revendications 9 et 10, **caractérisé en ce que** chaque levier (22) est réalisé sous forme de levier coudé (20).

12. Appareil selon la revendication 11, **caractérisé en ce que** le levier coudé présente un bras court (23) sur lequel est agencé le tronçon de paroi (25) et un bras le long (24) sur lequel se trouve un axe de pivotement ou une zone de pivotement.

13. Appareil selon l'une des revendications 9 à 12, **caractérisé en ce qu'**il est prévu au moins trois leviers (22 ; 22') agencés de façon répartie en direction périphérique de l'évidement (19).

14. Appareil selon l'une des revendications 9 à 13, **caractérisé en ce que** les tronçons de paroi stationnaires (20) s'étendent sensiblement parallèlement à la direction d'enfoncement (14).

15. Appareil et selon l'une des revendications 9 à 14, **caractérisé en ce que** la matrice (15) comporte une sécurité anti-chute (35, 36) pour chaque levier (22 ; 22').

16. Appareil selon la revendication 15, **caractérisé en ce que** la sécurité anti-chute est formée par une saillie annulaire (35) sur un pilier médian de la matrice, qui vient en contact avec une saillie (36) à l'extrémité inférieure de chaque levier (22') lorsque le levier a été extrait suffisamment loin hors de la matrice.

17. Appareil selon l'une des revendications 9 à 16, **caractérisé en ce que** le poinçon (9) comporte un évidement (10) dans lequel pénètre une tige (4, 4') de l'élément d'assemblage auxiliaire (2, 2') et qui est entouré par une surface de pression (11), ledit élément d'assemblage auxiliaire (2 ; 2') présentant un épaulement auxiliaire (7 ; 7') qui s'applique contre la surface de pression (11).

18. Appareil selon l'une des revendications 9 à 17, **caractérisé en ce que** la matrice (15) comporte au fond de l'évidement (19) une saillie (21) qui enfonce le matériau de la pièce à oeuvrer (3 ; 3a, 3b) dans un creux (8 ; 8') du pied (6 ; 6') de l'élément d'assemblage auxiliaire (2 ; 2') et qui assure que le matériau du pied forme les zones en contre dépouille (30).
